Europäisches Patentamt

European Patent Office

Office européen des brevets

(11) Veröffentlichungsnummer: **0 146 015**
A2

## (12) EUROPÄISCHE PATENTANMELDUNG

(21) Anmeldenummer: **84114254.0**

(51) Int. Cl.⁴: **G 01 N 15/06**

(22) Anmeldetag: **26.11.84**

(30) Priorität: **02.12.83 DE 3343598**

(71) Anmelder: **BASF Aktiengesellschaft,
Carl-Bosch-Strasse 38, D-6700 Ludwigshafen (DE)**

(43) Veröffentlichungstag der Anmeldung: **26.06.85
Patentblatt 85/26**

(72) Erfinder: **Eisenlauer, Josef, Dr. Chem.,
Neuwiesenstrasse 28, D-6700 Ludwigshafen (DE)**
Erfinder: **Horn, Dieter, Dr. Chem., Schroederstrasse 69,
D-6900 Heidelberg (DE)**
Erfinder: **Neuwirth, Manfred, Dipl.-Ing., Thorner
Strasse 2B, D-6800 Mannheim (DE)**

(84) Benannte Vertragsstaaten: **AT BE CH DE FR GB IT LI NL
SE**

(54) **Verfahren zur Beurteilung des Dispergiergrades in konzentrierten, strömenden Dispersionen.**

(57) Verfahren für eine schnelle in situ Beurteilung des Dispergiergrades in strömenden Zweiphasensystemen, insbesondere für die Ermittelung einer optimalen Dosierung von Dispergier- bzw. Flockungshilfsmitteln in konzentrierten Dispersionen, bei dem durch eine Messung des Druckabfalles, den eine strömende Dispersion entlang einer definierten Laufstrecke in einer Rohrströmung erfährt, die Zuordnung zu ihrem Dispergiergrad erfolgt.

EP 0 146 015 A2

ACTORUM AG

0146015

Verfahren zur Beurteilung des Dispergiergrades in konzentrierten, strömenden Dispersionen

Die vorliegende Erfindung betrifft ein Verfahren für eine schnelle in situ Beurteilung des Dispergiergrades in strömenden Zweiphasensystemen, insbesondere für die Ermittelung einer optimalen Dosierung von Dispergier- bzw. Flockungshilfsmitteln in konzentrierten Dispersionen.

Es ist bekannt, den Dispergiergrad in strömenden Systemen auf laseroptischem Wege in situ zu messen und als Regelgröße für die Optimierung der Hilfsmitteldosierung einzusetzen. Obwohl die laseroptische Methode die von einer einfachen Trübungsmessung her bekannten Probleme mit der Verschmutzung der Durchflußküvette teilweise vermeidet, ist ihr Einsatz auf relativ verdünnte, noch durchstrahlbare Dispersionen beschränkt. Für höher konzentrierte Dispersionen und/oder Dispersionen mit starker Adhäsionstendenz ist seit kurzem ein neuartiges Ultraschallsystem verfügbar, das die Messung von Partikelkonzentrationen in strömenden Systemen ermöglicht, es ist jedoch bisher nicht geklärt, wie empfindlich dieses System auf Änderungen des Dispergiergrades reagiert.

Mit einer einfachen Trübungsmessung in Form einer Tauchsonde im Filterablauf wurde bereits versucht, die Schlammentwässerung auf kontinuierlich arbeitenden Maschinen über die Flockungsmitteldosierung zu regeln (Korrespondenz Abwasser 27, 5 (1980) 287 - 289). Weiterhin ist aus der Patentanmeldung DE 3 300 249 A1 bekannt, die Fahrweise von Entwässerungsmaschinen über die frei abfließende Filtratmenge als Führungsgröße eines Flockungsmittelregelkreises zu optimieren. Stand der Technik ist es auch, im Zulauf der Entwässerungsmaschine Proben der geflockten Dispersionen zu entnehmen, ihre Entwässerbarkeit zu ermitteln und entsprechend dem Ergebnis die Hilfsmitteldosierung nachzuführen.

Nachteilig wirkt sich bei diesen ansonsten recht brauchbaren Regelungen die Trägheit des Gesamtsystems aus. Als Führungsgrößen werden zwar die in der Praxis interessierenden Parameter, wie Filtratmenge, Entwässerbarkeit und Filtrattrübung verwendet; diese sind jedoch makroskopische Sekundäreffekte des primären Flockungsprozesses und deshalb erst mit einer Verzögerung, mindestens entsprechend der Verweilzeit im Trennapparat, meßbar. In den genannten Regelkreisen wird i. a. zunächst die Hilfsmittelmenge willkürlich verändert. Man mißt die Auswirkungen anhand der sekundären Parameter und führt weiterhin stufenweise eine Optimierung der Flockungsmittelmenge durch. Bei kurzfristig auftretenden, wesentlichen Veränderungen der Entwässerungseigenschaften des Schlammes kommt es zu Schwierigkeiten mit dieser Art der Regelung, weil die Automatik zum Beispiel nicht unterscheiden kann, ob eine Veränderung der Filtratablaufmenge auf Veränderungen der Schlammeigenschaften oder der Hilfsmittelzugabe zurückzuführen ist.

Ausgehend von diesem Stand der Technik lag der vorliegenden Erfindung die
Aufgabe zugrunde, ein Verfahren zur in situ Detektion des Dispergiergrades in konzentrierten, strömenden Dispersionen zu schaffen, das
schnell und feinfühlig auf Veränderungen des Dispergiergrades reagiert
und damit eine zuverlässige Führungsgröße in einem Hilfsmittelregelkreis
von Dispergier- oder Entwässerungsmaschinen bereitstellt, wo die durch
den veränderten Dispergiergrad induzierten Sekundäreffekte vorteilhaft
genutzt werden.

Diese Aufgabe wird erfindungsgemäß gelöst durch eine Messung des Druckabfalles, den eine strömende Dispersion entlang einer definierten Laufstrecke einer Rohrströmung erfährt und die Zuordnung des Meßwertes zum
Dispergiergrad, der durch die Hilfsmitteldosierung systematisch verändert werden kann.

Das Verfahren wird erfindungsgemäß besonders vorteilhaft stromabwärts von
einer Dosierstelle eines Hilfsmittels durchgeführt, wodurch eine Optimierung der Dosierung zugänglich wird; ferner indem zusätzlich das Ergebnis auf den Meßwert normiert wird, der erfindungsgemäß stromaufwärts vor
der Hilfsmitteldosierung bestimmt wird; ferner indem der normierte Meßwert als Führungsgröße für den Hilfsmittelregelkreis von Apparaten zur
Fest/Flüssig-Trennung, insbesondere Entwässerungsmaschinen mit einem oder
mehreren Regelkreisen zur Anpassung an Schlämme oder Dispersionen mit
sich verändernden Entwässerungseigenschaften, wie Flockungsmittelregelkreis und/oder Durchsatzregelkreis bzw. Siebgeschwindigkeitsregelkreis
(bei Siebbandpressen) verwendet wird.

Eine schnelle in situ Messung des Dispergiergrades in strömenden Systemen kann zu zwei unterschiedlichen Anwendungszwecken genutzt werden.
Zum einen ist die Verfolgung des Dispergierfortschrittes in verfahrenstechnischen Zerkleinerungsapparaten möglich. Hier kann der Einfluß von
Apparateparametern und Dispergierhilfsmitteln untersucht werden. Als
Beispiel sei nur die Naßzerkleinerung unter Zusatz von Dispergierhilfsmitteln genannt. Zum anderen wird das Verfahren zur Messung der gezielten Destabilisierung von Dispersionen durch den Zusatz von Flockungshilfsmitteln eingesetzt. Der primäre Flockungsprozeß hat i. a. eine in Fest/Flüssig-Trennapparaten vorteilhaft genutzte Änderung von makroskopischen Parametern der Dispersion, wie z. B. Sedimentations- oder Entwässerungsverhalten zur Folge. In der Regel existiert für beide Anwendungszwecke eine optimale Hilfsmitteldosierung.

Das vorliegende Verfahren ermöglicht die Messungen in situ durchzuführen, so daß sehr schnelle Veränderungen im Dispergiergrad aufgrund von gezielter Hilfsmitteldosierung detektiert werden.

Diese Eigenschaften lassen das Verfahren sowohl zum Einsatz in Labortests, zur Beurteilung der Wirkungsweise von Dispergier- bzw. Flockungshilfsmitteln als auch für die on line-Kontrolle und Steuerung von Dispergier- bzw. Flockungs/Entwässerungsanlagen geeignet erscheinen.

Das Verfahren beruht auf der Messung des Druckabfalls den eine strömende Dispersions entlang einer definierten Laufstrecke in einer Rohrströmung erfährt und der Zuordnung zu ihrem durch die Dosierung von Dispergier- oder Flockungshilfsmitteln veränderbaren Dispergiergrad. Der Meßeffekt korreliert insbesondere bei konzentrierten Dispersionen in hohem Maße mit der Hilfsmitteldosierung, wie in den Ausführungsbeispielen noch näher erläutert wird. Bei der Realisierung der Druckmessung kann auf den Stand der Technik zurückgegriffen werden.

Drei Ausführungsbeispiele der Erfindung sind im folgenden dargestellt und werden näher beschrieben, und zwar zeigen:

Fig. 1    eine Regeleinrichtung für eine Schlammentwässerungsmaschine (z. B. Siebbandpresse, Dekanter, Kammerfilterpresse),

Fig. 2    die Abhängigkeit des gemessenen Druckabfalls $\Delta$ p [mbar] von der spezifischen Hilfsmitteldosierung Cp/Cs [mg/g] in einer typischen Faulschlammsuspension,

Fig. 3    die Abhängigkeit des Filtratvolumens $V_E$ [cm$^3$] von der Entwässerungszeit t [sec] bei unterschiedlichen Hilfsmitteldosierungen entsprechend Fig. 2.

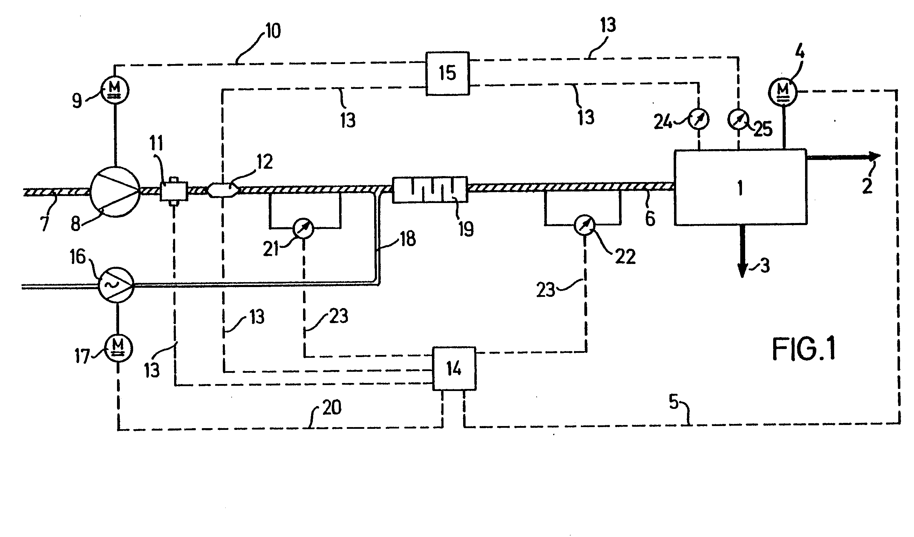

Die Figur 1 zeigt in schematischer Darstellung die Anordnung einer Regeleinrichtung bei einer Schlammentwässerungsmaschine 1. Die Schlammentwässerungsmaschine 1 ist in bekannter Weise aufgebaut mit einem Filtratablauf 2 und einem Schlammaustrag 3. Über einen Motor 4, der über eine Reglerleitung 5 an einen Regler 14 angeschlossen ist, kann der Durchsatz, z. B. über die Siebbandgeschwindigkeit, an die spezifischen Schlammbedingungen in einer Schlammzufuhr 6 angepaßt werden.

Die zu entwässernde Dispersion kommt durch eine Zuleitung 7 zu einer Schlammpumpe 8, die über einen Antriebsmotor 9 und eine Reglerleitung 10 einen veränderten Durchsatz ermöglicht.

Stromabwärts von der Schlammpumpe 8 wird über eine Dichtemessung 11 und eine Durchflußmessung 12 die Ermittelung des Massenstroms durchgeführt. Beide Meßgeräte 11, 12 sind über eine Reglerleitung 13 mit dem Regler 14 verbunden. Weiter ist noch die Durchflußmessung über die Reglerleitung 13 mit einem Regler 15 verbunden.

Die Dosierung des Flockungsmittels erfolgt über eine Pumpe 16 mit drehzahlveränderbarem Antrieb 17 in einer Flockungsmittelleitung 18. Die schnelle Mischung von Flockungsmittel und Dispersion wird in einem Mischelement 19 durchgeführt. Der Antrieb 17 ist mit einer Reglerleitung 20 an den Regler 14 angeschlossen.

Die Messung des Druckabfalls im Schlammzulauf 6 erfolgt stromaufwärts vom Mischelement 19 mit einem Druckmeßgerät 21 und stromabwärts vom Mischelement 19 mit einem Druckmeßgerät 22. Beide Druckmeßgeräte 21, 22 sind über Reglerleitungen 23 mit dem Regler 14 verbunden. Die Druckmeßgeräte 21 und 22 können entweder, wie in Figur 1 dargestellt, direkt in der Schlammzufuhrleitung 6 oder in entsprechenden bypass-Leitungen angeordnet sein.

Es ist demnach die Funktionsweise des Reglers 14, der für die Dosierung des Flockungsmittels zuständig ist, vom Dichtemesser 11 und vom Durchflußmesser 12 sowie vom Verhältnis der Meßwerte der beiden Druckmesser 21 und 22 abhängig; beeinflußt werden die beiden Antriebe 4 und 17. Der Regler 15 ist für den Durchsatz der Dispersion vorgesehen und ist über die Reglerleitung 13 mit dem Durchflußmesser 12 und einem Meßgerät 24 für die Schlammspiegelhöhe bzw. einem Kuchendickenmesser 25 verbunden.

Wesentlich ist, daß für den Flockungsmittelregelkreis der aus den beiden Druckmessungen 21, 22 ermittelte normierte Druckabfall der strömenden Dispersion als Führungsgröße verwendet wird. Es wird die Flockungsmittelzugabe optimiert, indem der normierte Druckabfall dem Minimalwert oder gegebenenfalls einem vorgegebenen Wert nachgeführt wird, insbesondere indem durch Iterationsschritte sich dieser Wert einpendelt. Der vorgegebene Sollwert kann zusätzlich über die Massenstrommessungen an Schwankungen in der Schlammzufuhr angepaßt werden.

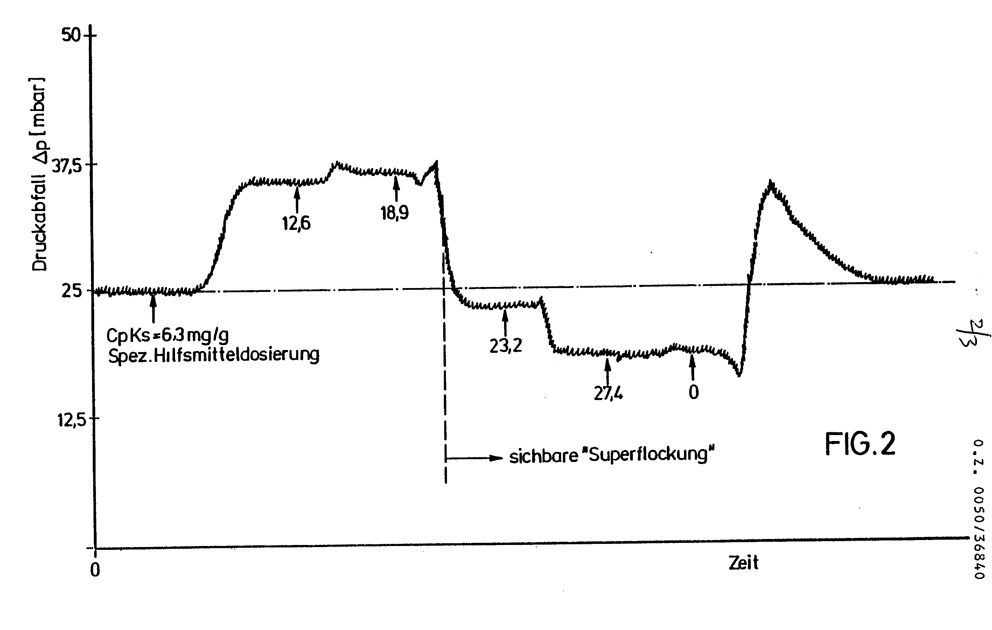

In Figur 2 ist ein typisches Ergebnis einer Druckmessung dargestellt, die erfindungsgemäß zwei Meter stromabwärts von der Dosierstelle eines kationischen Hilfsmittels durchgeführt wurde. Der Druckabfall erfolgte über eine Laufstrecke von einem Meter an einer Rohrleitung mit 3 mm Innendruckmesser bei einem Durchsatz von 100 $cm^3$/Min. Als Dispersion wurde ein kommunaler Faulschlamm mit einem Trockengehalt von 19 $g/dm^3$ verwendet. Die Dosierung des Hilfsmittels, aus einer Stammlösung von 8 $g/dm^3$, wurde im Bereich von 6,3 bis 27,4 mg Hilfsmittel pro g Substrat variiert. Die Verhältnisse sind typisch für eine erfindungsgemäße Druckmessung im bypass einer Schlammzufuhrleitung.

Der Druckabfall steigt zunächst bei geringen Dosierungen, 6,3 bis 12,6 mg/g, gegenüber dem Bezugswert des ungeflockten Systems an und fällt dann sprunghaft bei Dosierungen von größer als 18,9 mg/g unter den Bezugswert ab. Nach Beendigung der Hilfsmitteldosierung geht der Druckabfall auf den Ausgangswert zurück. Werden bei verschiedenen Dosierungen Proben des geflockten Schlammes in Standzylindern abgefüllt, so findet man überraschenderweise, daß der sprunghafte Rückgang des Druckabfalls mit dem ersten Auftreten von gut sichtbaren Makroflocken korreliert.

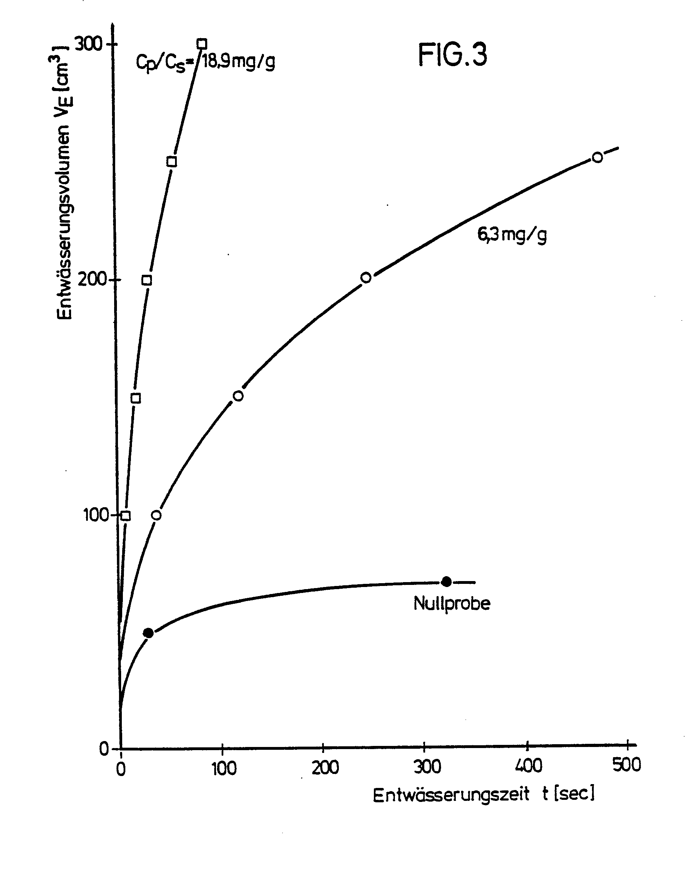

Dieser Befund wird durch die entsprechenden Entwässerungskurven der bei Dosierungen von 6,3 bzw. 18,9 mg/g abgefüllten Proben bestätigt (Figur 3).

Die kleinere Dosierung hat bereits eine ausgeprägte Entwässerungsbeschleunigung zur Folge. Eine sehr deutliche Steigerung ist nach Überschreiten der in Figur 2 auftretenden kritischen Dosierung von 18,9 mg/g zu erzielen. Eine weitere Erhöhung der Dosierung führt nur noch zu geringfügigen Verbesserungen des Entwässerungsverhaltens.

Patentansprüche

1. Verfahren für eine schnelle in situ Beurteilung des Dispergiergrades in strömenden Zweiphasensystemen, insbesondere für die Ermittelung einer optimalen Dosierung von Dispergier- bzw. Flockungshilfsmitteln in konzentrierten Dispersionen, dadurch gekennzeichnet, daß durch eine Messung des Druckabfalles, den eine strömende Dispersion entlang einer definierten Laufstrecke in einer Rohrströmung erfährt, die Zuordnung zu ihrem Dispergiergrad erfolgt.

2. Verfahren nach Anspruch 1, dadurch gekennzeichnet, daß die Messung stromabwärts von einer Dosierstelle eines Hilfsmittels erfolgt.

3. Verfahren nach Anspruch 2, dadurch gekennzeichnet, daß eine zweite, analoge Messung des Druckabfalls stromaufwärts vor der Dosierstelle des Hilfsmittels erfolgt und der dabei erzielte Meßwert zur Normierung des stromabwärts erzielten Meßwertes verwendet wird.

4. Verfahren nach Anspruch 2 und 3, dadurch gekennzeichnet, daß der Meßwert als Führungsgröße für einen Flockungsmittelregelkreis in Apparaten zur Fest/Flüssig-Trennung, insbesondere Entwässerungsmaschinen, mit einem oder mehreren Regelkreisen zur Anpassung an Schlämme oder Dispersionen mit sich verändernden Entwässerungseigenschaften, wie Flockungsmittelregelkreis und/oder Durchsatzregelkreis bzw. Siebgeschwindigkeitsregelkreis bei Siebbandpressen, verwendet wird.

Zeichn.

FIG.1

O.Z. 0050/36840

0146015

FIG.2

sichbare "Superflockung"

Druckabfall Δp [mbar]

CpKs=6,3 mg/g
Spez.Hilfsmitteldosierung

12,6    18,9    23,2    27,4    0

Zeit

2/3

O.Z. 0050/36840

0146015

FIG.3

Entwässerungsvolumen $V_E$ [cm³]

$C_p/C_S = 18,9\,mg/g$

6,3 mg/g

Nullprobe

Entwässerungszeit t [sec]